# EUROPEAN PATENT SPECIFICATION

(11) **EP 0 896 511 B1**
(45) Date of publication and mention of the grant of the patent: **14.08.2002**
(21) Application number: 97919368.7
(22) Date of filing: 15.04.1997
(51) Int. Cl.: A23G 9/02

(54) **LOW TEMPERATURE FOOD PRODUCT**
SCHOKOLADENPRODUKTE FUER NIEDRIGE TEMPERATUR
PRODUIT ALIMENTAIRE CONSERVE A BASSES TEMPERATURES

(30) Priority: 01.05.1996 EP 96303050
(43) Date of publication of application: 17.02.1999
(73) Proprietor: UNILEVER PLC, London EC4P 4BQ (GB); UNILEVER N.V., 3013 AL Rotterdam (NL)
(72) Inventor: GRIECO, Stefano, I-80059 Torre Del Greco (IT); HODDLE, Andrew, Northampton NN10 6BY (GB); STEWART, Murray Fraser, Sharnbrook, Bedfordshire MK44 1PQ (GB); SZTEHLO, Andrew, I-80131 Napoli (IT)
(74) Representative: Hugot, Alain
(86) International application number: EP9701900
(87) International publication number: WO9740700

(56) References cited:
- EP-A- 0 221 757
- EP-A- 0 427 544
- EP-A- 0 522 704
- EP-A- 0 564 077
- EP-A- 0 615 692
- WO-A-97/02754
- GB-A- 1 137 368
- US-A- 3 184 315
- US-A- 4 244 977
- US-A- 4 353 927
- US-A- 4 542 035
- US-A- 4 560 563
- US-A- 4 663 176
- DATABASE WPI Week 8238 Derwent Publications Ltd., London, GB; AN 82-79649E XP002015356 & JP 57 129 647 A (FUJI OIL) , 11 August 1982

## Description

### Technical Field of the Invention

The invention relates to a low temperature confectionery product.

### Background to the Invention

It is well-known to produce frozen ice-cream having a chocolate taste. Chocolate ice-cream is tremendously popular with consumers and is traditionally prepared by adding chocolate flavouring ingredients to ice-cream. A disadvantage of these chocolate flavoured ice-creams is however that they tend to lack the chocolate texture.

Also it is well-known to use traditional chocolate as a component for ice-cream products. Well-known products in this range are for example stracciatella ice-cream (vanilla ice-cream with small pieces of chocolate) and chocolate coated blocks of ice-cream e.g. on a stick. A disadvantage with such chocolate ingredients in ice-cream products is that due to the hardness of the chocolate at low temperatures their level needs to be relatively low, otherwise the product is too hard to be bitten.

The invention aims at providing a confectionery product which is stored at a low temperature, and has an improved texture and flavour as compared to the above mentioned products.

JP 57/129,647 discloses a chocolate material which has a soft texture. This soft texture is achieved by the substitution of the cocoa butter or hard fat substitute with a fat having a lower melting point.

US 4,663,176 discloses a frozen chocolate mousse made by adding semi sweet chocolate into the remaining mousse ingredients. The mousse contains from 0.5 to 11.5% cocoa fat.

EP 427,544 discloses the production of chocolate containing 3 to 30 wt% of water which can be used as a coating for ice cream. The product obtained is a water in oil emulsion and thus an emulsifier such as nut paste or a sugar fatty ester is required to stabilise.

EP 442 324 discloses the incorporation of a O/W emulsion into chocolate.

GB 1,233,258 discloses in example II a frozen aerated confection comprising cocoa powder.

US 3,982,042 disclosed a frozen chocolate flavoured confection comprising low levels of fat.

Surprisingly it has been found that a low temperature confectionery product can be prepared if a combination of ingredients is used within specific ranges.

### Disclosure of the Invention

Accordingly the invention relates to a low temperature confectionery product comprising the following ingredients:
a) 0 to 8 wt% of cocoa solids non fat;
b) 3.5 to 15 wt% of milk fat;
c) from 15 to 25 wt% of cocoa butter, hard fat cocoa butter equivalents or substitutes and combinations thereof;
d) from 35 to 55 wt% of water;
e) from 5 to 30% of sugar
f) from 9 to 20 wt% of milk solids non fat.
providing that (b) + (f) is greater than or equal to 14%.

The confectionery product of the invention is an oil in water emulsion.

Preferably the total level of b) and c) in combination with other fat ingredients (for example vegetable fat) is more than 23.5 wt%.

The total level of a) and c) (cocoa ingredients) is preferably more than 20 wt%.

The level of cocoa solids non fat in products of the invention is from 0 to 8 wt%. For the purpose of the invention cocoa solids non fat are ingredients derived from cocoa beans other than cocoa butter. The level is calculated as dry ingredients.

The level of milk fat is between 3.5 and 15 wt%. The fat can be added as such, but also possible is the addition of fatty or skimmed milk powder and/or milk and/or cream. Preferably the milk fat level is from 3.5% to 12 wt%, more preferred from 3.5% and 10 wt%.

The level of cocoa butter and/or hard fat cocoa butter equivalent or substitute is from 15 to 25 wt%. Again the cocoa butter can be added as such, but also possible is the addition of (part of) the cocoa fat as part of other cocoa solids, for example cocoa powder. Examples of hard fat cocoa butter equivalents or substitutes are lauric or hydrogenated fats, Coberine (trademark), Crokcool (trademark) and Calvetta (trademark). Preferably the level of cocoa butter or hard fat cocoa butter substitute is from 16 to 22 wt%, more preferred 17.5 to 20 wt%.

Generally the water level is from 35 to 55 wt% of the composition. Preferably the water level is such that a water-continuous composition is obtained. Preferred water levels are from 35 to 47 wt%, more preferred 40 to 45 wt%. The water content can be added as for examples, water, liquid sugar, cream, milk, condensed milk, fruits, juices and mixtures thereof.

The sugar level of the composition is generally from 5 to 30 wt% and may be varied in this range according to the desired sweetness of the product. For medium sweet products the preferred sugar level is from 10 to 20 wt%.

The level of milk solids non fat is from 9 to 20 wt%, more preferred 9 to 18 wt%, especially, 9 to 16 wt%. The milk solid non-fat may be added as such e.g. as lactose, milk'protein or skimmed milk powder or in combination with water e.g. as (skimmed) milk. The term milk solids non-fat is intended to include milk replacers such as Esprion 300 (trademark), Kerry W901 Whey Protein Concentrate (trademark) and other enriched whey powders.

By low temperature confectionery product is meant that the products are intended to be stored at a temperature of less than 7°C, for example at the temperature of a refrigerator or freezer. In a preferred embodiment of the invention, however, the products of the invention are frozen to a temperature of less than -2°C, more preferred from -10°C to -30°C, most preferred from -20°C to -30°C.

The products may be consumed either directly from the refrigerator or freezer, or advantageously they may be warmed in ambient temperatures before consumption. It is a key feature of the product of the invention that its structure is surprisingly stable at ambient temperatures, whereas for example ice cream melts and has to be consumed relatively rapidly on removal from frozen storage. Thus the product may be removed from storage and placed in, for example, a lunch box for consumption some hours later.

In an especially preferred embodiment of the invention the low temperature confectionery product is aerated. Preferably the overrun is between 20 and 300%, more preferred 40 to 150%, most preferred 50 to 120%. Aerated frozen confectionary products of the invention have an excellent texture somewhere between ice-cream and chocolate and are highly appreciated by consumers.

Low temperature confectionery products according to the invention may contain a number of optional ingredients normally present in ice-cream and or chocolate. Examples of such ingredients are flavouring materials, emulsifiers, stabilisers, colorants , nuts, etc. For increasing the ability to handle the product it is preferred that the level of emulsifiers is between 0.1 and 1 wt%. Especially preferred is lecithin as emulsifying ingredient.

Confectionery products of the invention may be prepared according to conventional routes for producing oil in water emulsions.

One suitable method is the preparation in analogy to the preparation of ice-cream i.e. mixing, optionally ageing, pasteurisation, aeration and freezing, for example in a scraped surface heat exchanger, followed by extrusion.

A preferred process of preparation is as follows; The water content is heated to approximately 65°C. The remaining ingredients are added with mixing. The product is then homogenised at 1500 to 2500psi, pasteurised, aerated and frozen. The pasteurisation step is preferably conducted in a heat exchanger such as a tubular heat exchanger, scraped surface heat exchanger and plate heat exchanger.

The confectionery product of the invention may be formed into a product on its own e.g. it may be filled into tubs, bars etc.

Alternatively the confectionery product of the invention may be used as a discrete element of a composite low temperature food product. Examples of such composite low temperature food products are for example: A shell made of conventional chocolate filled with the confectionary product of the invention, a layered food product comprising alternating layers of chocolate couverture and the low temperature confectionery product of the invention.

A further example of a composite product is the use of the confectionery product of the invention as a coating material, for example a frozen composite food product may be provided having a core of an ice confection such as ice cream and a coating layer of the confectionery product of the invention.

If the confectionery product of the invention is used in a composite food product, preferably the level of confectionery product is more than 10 wt%, more preferred more than 20 wt% and generally less than 99 wt% e.g. 75 wt% or less.

### Examples

The invention will now be illustrated by means of the following examples:

### Example 1

A frozen confectionery product of the following composition was prepared:

| Ingredient | wt% |
|---|---|
| full fat milk* | 48.2 |
| full cream powder** | 15.6 |
| cocoa butter | 15.5 |
| sucrose | 14.0 |
| cocoa mass*** | 6.5 |
| lecithin | 0.2 |

| | |
|---|---|
| Notes: * the full fat milk used contained 3.6 wt% fat, 9.4 wt% milk solids non fat and 87 wt% water. | |
| ** the full cream powder used contained 27 wt% fat and 68 wt% milk solids non fat | |
| *** the cocoa mass used consisted of 55 wt% cocoa fat and 45 wt% of other cocoa solids | |

The method of preparation was as follows: The milk was placed in a tank and the cream milk powder was added and the mix was heated to 40°C. The sucrose was added and the mixture was heated to 65°C.

The cocoa butter and cocoa mass were pre-melted and added into the mixture. The lecithin was added as the final ingredient. The mixture was stirred for 30 minutes at 65°C to pasteurize the mix.

The mixture was then homogenised at 500-1000 psi and aerated in an ice-cream freezer to an overrun of 100%. The product was extruded into tubs at a temperature of -5°C and subsequently hard frozen and stored at a temperature of -20°C

### Example 2

A frozen confectionery product having the following composition was prepared:

| Ingredient | wt% |
|---|---|
| Water | 41.70 |
| Skimmed Milk Powder | 11.50 |
| Sugar | 16.00 |
| Cocoa Butter | 15.50 |
| Cocoa Mass^{$} | 6.50 |
| Butter Fat | 8.50 |
| Lecithin | 0.30 |

| | |
|---|---|
| $ The cocoa mass used consisted of 54 wt% cocoa fat and 46 wt% of other cocoa solids. | |

The method of preparation was as follows;

The water was heated to 65°C. The remaining ingredients were added with constant mixing in the following order;
(a) skimmed milk powder
(b) sugar
(c) pre-melted fats
(d) lecithin

These additions took approximately 15 minutes.

The product was homogenised at from 1500 to 2500psi, before pasteurisation for 15 seconds at 82 to 85°C in a tubular heat exchanger.

The product was then aerated in an ice cream freezer to an overrun of approximately 60%. The product was extruded into tubs at a temperature of -5°C and subsequently hard frozen and stored at a temperature of -20°C.

### Example 3

Example 2 was repeated except the frozen confectionery product had the following formulation;

| Ingredient | wt% |
|---|---|
| Water | 44.50 |
| Skimmed Milk Powder | 9.70 |
| Sugar | 16.00 |
| Cocoa Butter | 17.50 |
| Cocoa Mass^{$} | 8.00 |
| Butter Fat | 4.30 |
| Lecithin | 0.30 |

| | |
|---|---|
| $ The cocoa mass used consisted of 54 wt% cocoa fat and 46 wt% of other cocoa solids. | |

### Example 4

Example 2 was repeated except the frozen confectionery product had the following formulation;

| Ingredient | wt% |
|---|---|
| Water | 47.68 |
| Skimmed Milk Powder | 9.70 |
| Sugar | 18.00 |
| Cocoa Butter | 20.00 |
| Cocoa Mass^{$} | 0.00 |
| Butter Fat | 4.30 |
| Lecithin | 0.30 |
| Vanillin | 0.02 |

| | |
|---|---|
| $ The cocoa mass used consisted of 54 wt% cocoa fat and. 46 wt% of other cocoa solids. | |

### Example 5

Example 3 was repeated except the frozen confectionery product had the following formulation:

| Ingredient | wt% |
|---|---|
| Water | 44.50 |
| Skimmed Milk Powder | 9.70 |
| Sugar | 16.00 |
| Calvetta (Trademark) | 17.50 |
| Cocoa Mass^{$} | 8.00 |
| Butter Fat | 4.30 |
| Lecithin | 0.30 |

| | |
|---|---|
| $ The cocoa mass used consisted of 54 wt% cocoa fat and 46 wt% of other cocoa solids. | |

### Example 6

Example 3 was repeated except the frozen confectionery product had the following formulation:

| Ingredient | wt% |
|---|---|
| Water | 44.50 |
| Skimmed Milk Powder | 9.70 |
| Sugar | 16.00 |
| Coberine (Trademark) | 17.50 |
| Cocoa Mass^{$} | 8.00 |
| Butter Fat | 4.30 |
| Lecithin | 0.30 |

| | |
|---|---|
| $ The cocoa mass used consisted of 54 wt% cocoa fat and 46 wt% of other cocoa solids. | |

### Example 7

Example 3 was repeated except the frozen confectionery product had the following formulation:

| Ingredient | wt% |
|---|---|
| Water | 44.50 |
| Skimmed Milk Powder | 9.70 |
| Sugar | 16.00 |
| Crokcool (Trademark) | 17.50 |
| Cocoa Mass^{$} | 8.00 |
| Butter Fat | 4.30 |
| Lecithin | 0.30 |

| | |
|---|---|
| $ The cocoa mass used consisted of 54 wt% cocoa fat and 46 wt% of other cocoa solids. | |

### Example 8

Example 4 was repeated except the frozen confectionery product had the following formulation;

| Ingredient | wt% |
|---|---|
| Water | 47.68 |
| Skimmed Milk Powder | 9.70 |
| Sugar | 18.00 |
| Calvetta (trademark) | 20.00 |
| Cocoa Mass^{$} | 0.00 |
| Butter Fat | 4.30 |
| Lecithin | 0.30 |
| Vanillin | 0.02 |

| | |
|---|---|
| $ The cocoa mass used consisted of 54 wt% cocoa fat and 46 wt% of other cocoa solids. | |

### Example 9

A coating of the following composition was prepared:

| Ingredient | wt% |
|---|---|
| full cream powder | 21.74 |
| cocoa butter | 15.35 |
| sucrose | 14.0 |
| cocoa mass | 6.5 |
| lecithin | 0.3 |
| water | to 100 |

The method of preparation was as follows: The water was placed in a tank and the cream milk powder was added and the mix was heated to 40°C. The sucrose was added and the mixture was heated to 65°C.

The cocoa butter and cocoa mass were pre-melted and added into the mixture. The lecithin was added as the final ingredient. The mixture was stirred for 30 minutes at 65°C to pasteurize the mix.

An ice cream blank was cooled to less than -30°C by dipping in liquid nitrogen for approx 10 seconds. The ice cream blank was then dipped into the mixture, the mixture having a temperature of 2°C. The coated product was dipped in liquid nitrogen for approx 10 seconds. A second coating of the mixture was then applied by dipping the product once more into the mixture followed by hardening the product by dipping in liquid nitrogen for approx 10 seconds.

The composite product contained approx 75%wt of ice cream and 25% of the coating material.

Alternatively the coating material could be used to enrobe ice cream.

### Example 10

A composite frozen confectionery product is prepared by filling a dark chocolate shell of 1.5 mm thickness with the frozen aerated confectionary product of example 1, 2, 3 or 4 at a temperature of -5°C The composite product contained 20 wt% of dark chocolate and 80wt% of the frozen confectionary product. The composite product was hard frozen and stored at -20°C.

Similar results can be obtained by using a milk or white chocolate shell.

### Example 11

A composite frozen product is prepared by extruding alternating layers of chocolate couverture and the frozen confectionery product of example 1, 2, 3 or 4. The layer thickness is 5 mm for the frozen confectionary product and 0.8 mm for the couverture. The total number of layers is 15. The temperature of extrusion is -5°C The product is hard frozen and stored at -20°C.

### Example 12

An composite frozen product is prepared by coating the inside of a wafer cone with a thin layer of chocolate. The cone is then filled with the frozen confectionery product of example 1, 2, 3 or 4 at -5°C and then hard frozen to -20°C.

## Claims

1. A low temperature confectionery product comprising the following ingredients:
a) 0 to 8 wt% of cocoa solids non fat;
b) 3.5 to 15 wt% of milk fat;
c) from 15 to 25 wt% of cocoa butter, hard fat cocoa butter equivalents or substitutes, and combinations thereof;
d) from 35 to 55 wt% of water;
e) from 5 to 30% of sugar;
f) from 9 to 20 wt% of milk solids non fat;
providing that (b) + (f) is greater than or equal to 14%.

2. A product according to claim 1 wherein the total level of (b) + (c) in combination with other fat ingredients is greater than 23.5wt%.

3. A product according to claim 1 or 2 wherein the total level of (a) + (c) is more than 20wt%.

4. A product according to any preceding claim wherein the product is aerated to an overrun of 20 to 300%.

5. Composite frozen food product comprising as one or more discrete elements at least 10 wt% of the frozen chocolate product of any one of claims 1 to 4.

6. A frozen composite food product having a core comprising an ice confection and a coating layer of a low temperature confectionery product according to any one of claims 1 to 4.

## Patentansprüche

1. Süßwarenprodukt mit niedriger Temperatur umfassend die folgenden Inhaltsstoffe:
a) 0 bis 8 Gew.-% fettfreie Kakaotrockenmasse;
b) 3,5 bis 15 Gew.-% Milchfett;
c) 15 bis 25 Gew.-% Kakaobutter, Hartfettkakaobutteräquivalente oder Ersatzstoffe und Kombinationen davon;
d) 35 bis 55 Gew.-% Wasser;
e) 5% bis 30% Zucker
f) 9 bis 20 Gew.-% fettfreie Milchtrockenmasse;
mit dem Vorbehalt, dass (b) + (f) größer oder gleich 14% sind.

2. Produkt nach Anspruch 1, wobei der Gesamtanteil an (b) + (c) in Kombination mit anderen Fettinhaltsstoffen größer als 23,5 Gew.-% ist.

3. Produkt nach Anspruch 1 oder Anspruch 2, wobei der Gesamtgehalt an (a) + (c) größer als 20 Gew.-% ist.

4. Produkt nach einem der vorhergehenden Ansprüche, wobei das Produkt bis auf eine Schwellung von 20% bis 300% belüftet wird.

5. Zusammengesetztes gefrorenes Nahrungsmittelprodukt umfassend als eines oder mehrere diskrete Elemente mindestens 10 Gew.-% des gefrorenen Schokoladenproduktes nach einem der Ansprüche 1 bis 4.

6. Gefrorenes zusammengesetztes Nahrungsmittelprodukt mit einem Kern, das ein Eiskonfekt und eine Überzugsschicht aus einem Süßwarenprodukt mit niedriger Temperatur nach einem der Ansprüche 1 bis 4 umfasst.

## Revendications

1. Produit de confiserie conservé à basse température comprenant les ingrédients suivants :
a) de 0 à 8 % en poids de solides non gras de cacao ;
b) de 3,5 à 15 % en poids de graisse butyrique ;
c) de 15 à 25 % en poids de beurre de cacao, d'équivalents ou de substituts gras et durs du beurre de cacao et des combinaisons de ceux-ci ;
d) de 35 à 55 % en poids d'eau ;
e) de 5 à 30 % de sucre ;
f) de 9 à 20 % en poids de solides de lait non gras
à la condition que (b) + (f) soit supérieur ou égal à 14 %.

2. Produit selon la revendication 1, dans lequel le niveau total de (b) + (c) en combinaison avec d'autres ingrédients gras est supérieur à 23,5 % en poids.

3. Produit selon la revendication 1 ou 2, dans lequel le niveau total de (a) + (c) est supérieur à 20 % en poids.

4. Produit selon l'une quelconque des revendications précédentes, dans lequel le produit est aéré avec un taux d'aération allant de 20 à 300 %.

5. Produit alimentaire composite congelé comprenant en tant qu'un ou que plusieurs éléments séparés, au moins 10 % en poids du produit de chocolat congelé selon l'une quelconque des revendications 1 à 4.

6. Produit alimentaire composite congelé ayant une partie centrale comprenant une confiserie glacée et une couche d'enrobage en un produit de confiserie se conservant à basse température selon l'une quelconque des revendications 1 à 4.
